# EUROPEAN PATENT SPECIFICATION

(11) **EP 0 884 340 B1**
(45) Date of publication and mention of the grant of the patent: **31.03.2004**
(21) Application number: 98109600.1
(22) Date of filing: 27.05.1998
(51) Int. Cl.: C08G 18/72

(54) **Process for the preparation of flexible polyurethane foam with improved fire-behaviour**
Verfahren zur Herstellung von Polyurethanweichschaumstoffen mit verbesserter Feuerbeständigkeit
Procédé de préparation d'une mousse flexible de polyuréthane ayant un comportement amélioré au feu

(30) Priority: 12.06.1997 IT MI971383
(43) Date of publication of application: 16.12.1998
(73) Proprietor: Dow Global Technologies Inc., Midland, Michigan 48674 (US)
(72) Inventor: Cellarosi, Barbara, 35129 Padova (IT); Sam, Felix Okon, 35020 Ponte S.Nicolo (Padova) (IT); Petrone, Antonio, 30038 Spinea (Venezia) (IT); Grego, Sandra, 30030 Salzano (Venezia) (IT); Checchin, Michele, 31022 Preganziol (Treviso) (IT); Tartari, Vittorio, 31100 Treviso (IT)
(74) Representative: Geary, Stephen

(56) References cited:
- EP-A- 0 111 189
- EP-A- 0 295 568
- EP-A- 0 422 471
- EP-A- 0 774 485

## Description

The present invention relates to a process for the preparation of flexible polyurethane foam with improved fire-behaviour.

More specifically, the present invention relates to a process for the preparation of flexible polyurethane foam with improved fire-behaviour, the polyurethane foam thus obtained and the isocyanate component suitable for the purpose.

The term "flexible polyurethane foam with improved fire-behaviour", as used in the present invention and claims refers to polyurethane foam both slabstock and moulded (cold or hot-moulded) applications capable of providing fire-resistance performances which pass, for example, the CSE RF4 test, class 1.IM, without the use of any flame retardant additive, of halogenated or phosphohalogenated type, and without the use of other additives such as melamine and its derivatives.

It is known that in the field of flexible foam, both slabstock and moulded, for furnishing and the car industry, it is becoming more and more important to obtain ever-increasing fire-behaviour performances.

These performances are normally reached by using flame retardant additives predispersed in polyurethane reagents. English patent 2.163.762, for example, describes a process for the preparation of flexible polyurethane foam according to which an isocyanate component is reacted with a polyol component in the presence of an expanding agent and a flame retardant additive.

According to this patent, fire-resistant polyurethane foam can be obtained using melamine as flame retardant additive and a modified polyol, for example a polyol containing a polymer selected from the polyaddition products between an alkanolamine and an isocyanate, as polyol component.

Russian patent SU 729.207, on the other hand, discloses a process for preparing fire-resistant polyurethane foam which comprises the use of an flame retardant additive, selected from bis(chloromethyl)-phosphonates, predispersed in one of the two polyurethane reagents.

Finally, U.S. patent 4.425.447 describes the use of tribromo-cumene as flame retardant agent for polyurethane foam.

Although the presence of flame retardant agents or additives in the final polyurethane foam, enables to achieve very satisfactory reaction to fire behaviour, they can cause other inconveniences by negatively influencing the foam physico-mechanical properties and/or by releasing toxic fumes during combustion.

To avoid these drawbacks, the Applicant has found that polyurethane foam can be prepared with an improved fire behaviour without having to resort to particular agents or additives but by suitably selecting the isocyanate component to be used together with the polyol component.

The present invention therefore relates to a process for the preparation of flexible polyurethane foam with improved fire-behaviour which comprises reacting:
a) an isocyanate component with a content of free NCO groups of between 30 and 35% by weight consisting of a mixture comprising:
   i) 20-30% by weight of toluene diisocyanate (TDI) ;
   ii) 30-50% by weight of oligomers of TDI with an isocyanate functionality of between 3 and 4;
   iii) 30-40% by weight of diphenylmethane diisocyanate (MDI) with a content of 2,4' isomers of more than 40% by weight;
b) a polyol component comprising at least one polyol with a functionality equal to or higher than 2 and an equivalent weight of between 500 and 4000 and 1.5-6% by weight, with respect to the polyol, of water.

According to the present invention, the isocyanate component can be prepared by the reaction of component (i) with itself with the help of a catalyst, generating a mixture (i)+(ii) and, subsequently, mixing with component (iii).

More specifically, component (i) consists of 2,4-toluene diisocyanate alone or mixed with at least 20% by weight of 2,6 isomer. Non-distilled or raw toluene diisocyanate, i.e., a partially purified toluene diisocyanate extracted from any plate of the distillation column, can be used.

Component (ii) essentially consists of a mixture of oligomers of TDI with a functionality of 3 and 4, catalytically generated by (i). In particular, the mixture essentially consists of 60-80% of trifunctional oligomers and 20-40% of tetrafunctional oligomers.

Component (ii) can be prepared by homopolymerization of TDI. In particular, trimerization is preferred amongst the homopolymerization reactions.

The catalyst used is selected from products, already known in literature, which induce this type of reaction such as tertiary amines. Examples of catalysts are trialkylamines, such as triethylamine, N-alkylmorpholines, such as N-methylmorpholine, triethanolamine, N,N'-dimethylpiperazine, dialkylaminomethylphenols, such as 2,4,6-tris(dimethylaminomethyl)phenol.

The catalyst is used in a quantity of between 0.01 and 2% by weight of component (ii). Once the desired homopolymerization degree has been obtained, the catalyst is neutralized by introducing a quantity, corresponding to or higher than the stoichiometric value, of an acid component, such as orthophosphoric acid, p-toluenesulfonic acid, acetic acid, trifluoroacetic acid or acid chlorides such as thionyl chloride and benzoyl chloride.

Component (iii) essentially consists of a mixture of 4,4' and 2,4' isomers of diphenylmethane diisocyanate in which the 2,4' isomer is between 45 and 60% w/w.

The polyol contained in the polyol component (b) is preferably a polyether polyol with a hydroxyl functionality of between 2 and 8 prepared by the polycondensation of C₂-C₄ alkylene oxides, preferably propylene and/or ethylene oxides.

The polycondensation is carried out on compounds (starters) having at least two active hydrogen atoms, such as glycols, triols, tetrols, etc. or such as amines, alkanolamines and polyamines, etc., or their mixtures.

Illustrative but not-limiting examples of polyether polyols to be used according to the present invention are those with propylene oxide or with ethylene oxide as chain terminations and in which the starter is a glycol such as dipropyleneglycol, a triol such as glycerine or trimethylolpropane, a tetrol such as pentaerythritol, a diamine such as ethylenediamine, an alkanolamine such as triethanolamine, a polyfunctional starter such as sucrose, an aromatic amine such as orthotoluenediamine, etc., or mixtures of the above compounds.

These polyols can be used as such or they can contain, in dispersion or partially grafted to the polyol chains, polymeric particles with dimensions of less than 20 µm. Polymers suitable for preparing these particles are polyacrylonitrile, polystyrene, SAN copolymers (Styrene-Acrylonitrile), polyvinylchloride, etc.

Further examples of polyols which can be used in the process of the present invention are those cited in Italian patent 1.260.446 or in U.S. patents 5.091.437, 5.530.033 and 5.422.414.

More detailed information on polyols and, in particular, on polyether polyols can be obtained from scientific literature, for example "Saunders & Frisch - Polyurethanes, Chemistry and Tecnology" Interscience, New York, 1964.

In the production of polyurethane foam according to the process of the present invention, water, used in a quantity ranging between 1.5 and 6% by weight, has a critical function as from the reaction between water and NCO groups of the isocyanate component (a), ureic bonds are formed associated with the release of carbon dioxide which causes the expansion/swelling process of the polyurethane resin to obtain flexible foam.

In the preparation of polyurethane foam with a reduced density, for example having a density equal to or less than 25 Kg/m³, the expanding function of water alone may not be sufficient to achieve these density values without drawbacks (scorching) due to the exothermic nature of the reaction between water and isocyanate groups. For this reason, the expanding action of the water can be supported by blowing agents of a physical nature, selected from hydrofluoroalkanes, liquid CO₂, hydrocarbons such as n-pentane, i-pentane, cyclopentane, etc. or their mixtures, dimethylcarbonate, etc.

The polyol component (b) may additionally contain the conventional additives for the preparation of polyurethane foam. For example, in the case of a process for the preparation of block or cold-moulded foam, the polyol component contains a catalyst selected from those of the amine type, such as triethylenediamine, and/or of the metallic type such as stannous octoate.

Other additives can be cell regulators, thermo-oxidation stabilizers, pigments, etc. Also in this case, technical details on the components and preparation of polyurethane foam are available in scientific literature for example in "Saunders & Frisch - Polyurethanes, Chemistry and Tecnology" Interscience, New York, 1964.

A further object of the present invention relates to flexible polyurethane foam with improved fire-behaviour having a density of between 15 and 80 Kg/m³ and an indentation hardness, measured according to ISO 2439 at 40% compression, higher than 50 N, generally between 50 and 400 N, obtainable with a process which comprises reacting:
a) an isocyanate component with a content of free NCO groups of between 30.5 and 33.5% by weight consisting of a mixture comprising:
   i) 20-30% by weight of toluene diisocyanate (TDI) ;
   ii) 30-50% by weight of oligomers of TDI with an isocyanic functionality of between 3 and 4;
   iii) 30-40% by weight of diphenylmethane diisocyanate (MDI) with a content of 2,4' isomers of more than 40% by weight;
   and in which the sum of the three components (i), (ii) and (iii) is equal to 100;
b) a polyol component comprising at least one polyol with a functionality equal to or higher than 2 and an equivalent weight of between 500 and 4000 and 1.5-6% by weight, with respect to the polyol, of water.

The flexible polyurethane foam of the present invention having a degree of fire-resistance which permits it to pass the present CSE RF4 test , class 1.IM and with a minimum content of melamine equal to or less than 20 parts by weight, of the total foam, for example 15-20 parts, the BS 5852/2 crib 5 test, showing characteristics which satisfy the demands of the furnishing and car industries.

Some illustrative but not-limiting examples are provided for a better understanding of the present invention and for its implementation.

### EXAMPLE 1

32.5 kg of TDI (80/20 mixture of 2,4 and 2,6 isomers) commercially known under the trade-name of TEDIMON 80, of the Applicant, are charged into a stirred pressure-resistant reactor, flushed with nitrogen and equipped with a diathermic oil heating jacket and water cooling coil.

The temperature inside the reactor is brought to 70°C and 97.5 g of a solution at 20% by weight in hexane of 2,4,6-tris(dimethylaminomethyl)phenol (DABCO TMR 30 of AIR PRODUCTS) are subsequently fed, obtaining a molar ratio TEDIMON 80/TMR 30 of about 2500/1. This addition defines the starting time of the reaction. The reactor is maintained at about 70°C for an hour and a half and the NCO content is determined giving the value of about 42%.

After a further 1.5 hours at 70°C a second sampling is carried out and the NCO content is determined resulting to about 32%.

After a further residence time of the system at 70°C of 0.5 hours, 32.5 g of benzoyl chloride are rapidly fed. This stops the trimerization reaction.

The reaction mass is maintained under stirring at 70°C for further 10 minutes and the NCO content is subsequently determined and results to be 32-33%.

17.5 Kg of MDI, a 50/50 mixture of 2,4' and 4,4' isomers, commercially available under the trade-name of TEDIMON 307, of the Applicant, preheated to 50°C, are added to the reaction product thus obtained. The system is left under stirring for 15 minutes at a temperature which reaches the equilibrium at about 55-60°C.

The product which is obtained has the following characteristics:
appearance: yellow-orange coloured liquid;
NCO % = 33.3;
viscosity at 25°C = 600 mPaxsec;
free TDI = 26.2%;
TDI oligomers = 38.8% of which 27.7% trifunctional and 11.8% tetrafunctional;
free MDI = 35%.

### EXAMPLES A-E

The isocyanate composition prepared according to example 1 was used for the preparation of polyurethane foams combined with the polyol component specified in the following table. The same table indicates the physical characteristics of the foam and the results of the reaction to fire tests.

The following definitions are indicated in the table:
Polymeric polyol: Polyether polyol with an average molecular weight Mw of about 4800 grafted with a Styrene-Acrylonitrile (SAN) polymer, known as TERCAROL 5923 of ENICHEM S.p.A.;
Polyol PM 6000: Polyether polyol with a molecular weight Mw of about 6000, commercially known as TERCAROL 767 of ENICHEM S.p.A.;
TDI 80/20: Toluene diisocyanate, TEDIMON 80 of ENICHEM S.p.A.;
PR 613/6: Isocyanate composition prepared according to example 1;
Cross-linking agent: Diethanolamine;
Stabilizer 1: NIAX SH 215 of OSI SPECIALTIES;
Stabilizer 2: TEGOSTAB B 4113 of GOLDSCHMIDTH;
Amine catalyst 1: NIAX A1 of OSI SPECIALTIES;
Amine catalyst 2: DABCO 33LV of AIR PRODUCTS;
Organometallic catalyst 1: DABCO T-9 of AIR PRODUCTS;
Organometallic catalyst 2: FOMREZ UL-22 of WITCO;
Flame-retardant additive: phospho-halogenated additive AMGARD TDCP/LV of ALBRIGHT & WILSON.

**Table**

| | A | B | C | D | E |
|---|---|---|---|---|---|
| POLYMERIC POLYOL | 100 | 100 | 100 | - | - |
| POLYOL PM 6000 | - | - | - | 100 | 100 |
| Water | 3.5 | 3.5 | 3.7 | 4.6 | 4.6 |
| Crosslinking agent | 1.4 | 1.6 | 1.6 | 2.0 | 2.0 |
| Stabilizer 1 | 0.7 | 0.7 | 0.7 | - | - |
| Stabilizer 2 | - | - | - | 0.7 | 0.7 |
| Amine catalyst 1 | 0.03 | 0.03 | 0.03 | - | - |
| Amine catalyst 2 | 0.1 | 0.1 | 0.1 | 0.15 | 0.15 |
| Organometal catalyst 1 | 0.1 | 0.1 | 0.1 | 0.05 | 0.05 |
| Organometal catalyst 2 | - | - | - | 0.05 | 0.05 |
| Melamine | - | 30 | - | - | 20 |
| Flame resistant addit. | 10 | 8 | - | - | - |
| TDI 80/20 | 44.0 | 44.0 | - | - | - |
| PR 631/6 | - | - | 49.8 | 54.1 | 54.1 |
| Density, kg/m³ | 25.7 | 27.1 | 38.6 | 28.5 | 32.0 |
| Compression strength 40% kPa | 2.15 | 2.73 | 3.12 | 2.33 | 2.19 |
| Permanent deformation 75%, % | 8.5 | 17.7 | 7.9 | 9.1 | 11.6 |
| Elastic yield, % | 54 | 44 | 49 | 52 | 50 |
| CSE RF4 test, class | 1.IM | 1.IM | 1.IM | 1.IM | 1.IM |
| BS 5852/2 crib 5 test | n.d | pass | n.d | n.d | pass |
| n.d = nor determined | | | | | |

## Claims

1. A process for the preparation of flexible polyurethane foam with improved fire-behaviour which comprises reacting:
a) an isocyanate component with a content of free NCO groups of between 30 and 35% by weight consisting of a mixture comprising:
i) 20-30% by weight of toluene diisocyanate (TDI);
ii) 30-50% by weight of oligomers of TDI with an isocyanate functionality of between 3 and 4;
iii) 30-40% by weight of diphenylmethane diisocyanate (MDI) with a content of 2,4' isomers of more than 40% by weight;
and in which the sum of the three components (i), (ii) and (iii) is equal to 100;
b) a polyol component comprising at least one polyol with a functionality equal to or higher than 2 and an equivalent weight of between 500 and 4000 and 1.5-6% by weight, with respect to the polyol, of water.

2. The process according to claim 1, wherein component (ii) essentially consists of 60-80% of trifunctional oligomers and 20-40% of tetrafunctional oligomers.

3. The process according to claim 1 or 2, wherein component (iii) essentially consists of a mixture of 4,4' and 2,4' isomers of diphenylmethane diisocyanate in which the 2,4' isomer is between 45 and 60% by weight.

4. The process according to any of the previous claims, wherein the polyol of the polyol component (b) is preferably a polyether polyol with a hydroxyl functionality of between 2 and 8 prepared by the polycondensation of C₂-C₄ alkylene oxides.

5. The process according to claim 4, wherein the alkylene oxides are propylene and/or ethylene oxides.

6. Flexible polyurethane foam with improved fire-behaviour having a density of between 15 and 80 Kg/m³ and an indentation hardness, measured according to ISO 2439 at 40% compression, higher than 50 N, obtainable with a process which comprises reacting:
a) an isocyanate component with a content of free NCO groups of between 30.5 and 33.5% by weight consisting of a mixture comprising:
i) 20-30% by weight of toluene diisocyanate (TDI) ;
ii) 30-50% by weight of oligomers of TDI with an isocyanate functionality of between 3 and 4;
iii) 30-40% by weight of diphenylmethane diisocyanate (MDI) with a content of 2,4' isomers of more than 40% by weight;
and in which the sum of the three components (i), (ii) and (iii) is equal to 100;
b) a polyol component comprising at least one polyol with a functionality equal to or higher than 2 and an equivalent weight of between 500 and 4000 and 1.5-6% by weight, with respect to the polyol, of water.

7. Isocyanate compositions having a content of free NCO groups of between 30.5 and 33.5 comprising:
i) 20-30% by weight of toluene diisocyanate (TDI) ;
ii) 30-50% by weight of oligomers of TDI with an isocyanate functionality of between 3 and 4;
iii) 30-40% by weight of diphenylmethane diisocyanate (MDI) with a content of 2,4' isomers of more than 40% by weight;
and in which the sum of the three components (i), (ii) and (iii) is equal to 100.

8. Use of the compositions according to claim 7 in the preparation of polyurethane foam having a density of between 15 and 80 Kg/m³ and a static lift, measured according to ISO 2439 at 40% compression, of more than 50 N.

## Patentansprüche

1. Verfahren zur Herstellung von flexiblem Polyurethanschaum mit verbessertem Brandverhalten, welches umfaßt die Umsetzung von:
a) einer Isocyanatkomponente mit einem Gehalt an freien NCO-Gruppen von zwischen 30 und 35 Gew.-%, bestehend aus einer Mischung, die umfaßt:
i) 20-30 Gew.-% von Toluoldiisocyanat (TDI);
ii) 30-50 Gew.-% von Oligomeren von TDI mit einer Isocyanatfunktionalität von zwischen 3 und 4;
iii) 30-40 Gew.-% von Diphenylmethandiisocyanat (MDI) mit einem Gehalt von 2,4'-Isomeren von mehr als 40 Gew.-%;
und worin die Summe von der drei Komponenten (i), (ii) und (iii) gleich 100 ist;
b) einer Polyolkomponente, umfassend wenigstens ein Polyol, das eine Funktionalität gleich oder höher als 2 und ein Äquivalentgewicht von zwischen 500 und 4.000 hat, und 1,5 - 6 Gew.-%, bezogen auf das Polyol, Wasser.

2. Verfahren nach Anspruch 1, bei welchem Komponente (ii) im wesentlichen aus 60-80 % an trifunktionellen Oligomeren und 20-40 % an tetrafunktionellen Oligomeren besteht.

3. Verfahren nach Anspruch 1 oder 2, bei welchem Komponente (iii) im wesentlichen aus einer Mischung von 4,4'- und 2,4'-Isomeren von Diphenylmethandiisocyanat besteht, in welcher das 2,4'-Isomere zwischen 45 und 60 Gew.-% ausmacht.

4. Verfahren nach einem der vorhergehenden Ansprüche, bei welchem das Polyol der Polyolkomponente (b) vorzugsweise ein Polyetherpolyol mit einer Hydroxylfunktionalität von zwischen 2 und 8 ist, hergestellt durch die Polykondensation von C₂-C₄-Alkylenoxiden.

5. Verfahren nach Anspruch 4, bei welchem die Akylenoxide Propylen- oder Ethylenoxide sind.

6. Flexibler Polyurethanschaum mit verbessertem Feuerverhalten, der eine Dichte von zwischen 15 und 80 kg/cm³ und eine Eindrückhärte, gemessen entsprechend ISO 2439 bei 40% Kompression, höher als 50 N hat, erhältlich mit einem Verfahren, welches umfaßt die Umsetzung von:
a) einer Isocyanatkomponente mit einem Gehalt an freien NCO-Gruppen von zwischen 30,5 und 33,5 Gew.-%, bestehend aus einer Mischung, die umfaßt:
i) 20-30 Gew.-% von Toluoldiisocyanat (TDI);
ii) 30-50 Gew.-% von Oligomeren von TDI mit einer Isocyanatfunktionalität von zwischen 3 und 4;
iii) 30-40 Gew.-% von Diphenylmethandiisocyanat (MDI) mit einem Gehalt von 2,4'-Isomeren von mehr als 40 Gew.-%;
und in welcher die Summe von der drei Komponenten (i), (ii) und (iii) gleich 100 ist;
b) einer Polyolkomponente, umfassend wenigstens ein Polyol mit einer Funktionalität gleich oder höher als 2 und einem Äquivalentgewicht von zwischen 500 und 4.000, und 1,5 - 6 Gew.-%, bezogen auf das Polyol, von Wasser.

7. Isocyanatzusammensetzungen mit einem Gehalt an freien Isocyanatgruppen von zwischen 30,5 und 33,5, umfassend:
i) 20-30 Gew.-% von Toluoldiisocyanat (TDI);
ii) 30-50 Gew.-% von Oligomeren von TDI mit einer Isocyanatfunktionalität von zwischen 3 und 4;
iii) 30-40 Gew.-% von Diphenylmethandiisocyanat (MDI) mit einem Gehalt von 2,4'-Isomeren von mehr als 40 Gew.-%;
und in welcher die Summe von der drei Komponenten (i), (ii) und (iii) gleich 100 ist;

8. Verwendung der Zusammensetzungen nach Anspruch 7 bei der Herstellung von Polyurethanschaum, der eine Dichte von zwischen 15 und 80 kg/cm³ und einem statischen Auftrieb, gemessen entsprechend ISO 2439 bei 40 % Kompression, von mehr als 50 N hat.

## Revendications

1. Procédé de préparation de mousse de polyuréthane flexible présentant un comportement au feu amélioré **caractérisé en ce qu'**il comprend le fait de faire réagir:
a) un composant isocyanate dont la teneur en groupes NCO libres vaut de 30 à 35 % en poids consistant en un mélange comprenant :
i) 20-30 % en poids de toluène-diisocyanate (TDI)
ii) 30-50 % en poids d'oligomères de TDI dont la fonctionnalité isocyanate vaut de 3 à 4,
iii) 30-40 % en poids de diphénylméthane-diisocyanate (MDI) dont la teneur en isomères 2,4' est supérieure à 40 % en poids, la somme des trois composants (i), (ii) et (iii) étant égale à 100,
b) avec un composant polyol comprenant au moins un polyol dont la fonctionnalité est égale ou supérieure à 2 et dont le poids d'équivalent vaut de 500 à 4000, et 1,5-6% en poids d'eau, par rapport au polyol.

2. Procédé selon la revendication 1, dans lequelle composant (ii) consiste principalement en 60-80 % d'oligomères trifonctionnels et 20-40 % d' oligomères tétrafonctionnels.

3. Procédé selon la revendication 1 ou 2, dans lequel le composant (iii) consiste principalement en un mélange d'isomères 4,4' et 2,4' de diphénylméthane-diisocyanate dans lequel l'isomère 2,4' est présent en une proportion de 45 à 60 % en poids.

4. Procédé selon l'une quelconque des revendications précédentes, dans lequel le polyol du composant polyol (b) est de préférence un polyéther polyol dont la fonctionnalité hydroxyle vaut de 2 à 8 préparé par une polycondensation d'oxydes d'alkylène en C₂-C₄.

5. Procédé selon la revendication 4, dans lequel les oxydes d'alkylène sont des oxydes de propylène et/ou d'éthylène.

6. Mousse de polyuréthane flexible présentant un comportement au feu amélioré et une masse volumique de 15 à 60 kg/m³ et une dureté, mesurée selon ISO 2439 à 40 % de compression, supérieure à 50 N, et qui peut être obtenue par un procédé comprenant le fait de faire réagir:
a) un composant isocyanate dont la teneur en groupes NCO libres vaut de 30.5 à 33.5 % en poids consistant en un mélange comprenant :
i) 20-30 % en poids de toluène-diisocyanate de (TDI)
ii) 30-50 % en poids d'oligomères de TDI dont la fonctionnalité isocyanate vaut de 3 à 4 ;
iii) 30-40 % en poids de diphénylméthane-diisocyanate (MDI) dont la teneur en isomères 2,4' est supérieure à 40 % en poids, la somme des trois composants (i), (ii) et (iii) étant égale à 100,
b) avec un composant polyol comprenant au moins un polyol dont la fonctionnalité est égale ou supérieure à 2 et dont le poids d'équivalent vaut de 500 à 4000, et 1,5-6% en poids d'eau, par rapport au polyol.

7. Compositions isocyanate présentant une teneur en groupes NCO libres de 30.5 à 33.5 comprenant :
i) 20-30 % en poids de toluène-diisocyanate de (TDI)
ii) 30-50 % en poids d'oligomères de TDI dont la fonctionnalité isocyanate vaut de 3 à 4 ;
iii) 30-40 % en poids de diphénylméthane-diisocyanate (MDI) dont la teneur en isomères 2,4' est supérieure à 40 % en poids ;
la somme des trois composants (i), (ii) et (iii) étant égale à 100,

8. Utilisation d'une composition selon la revendication 7 pour la préparation de mousse de polyuréthane présentant une masse volumique de 15 à 80 kg/m³ et une force ascensionnelle statique, mesurée selon ISO 2439 à 40 % de compression, de plus de 50 N.
